# EUROPÄISCHE PATENTSCHRIFT

(11) **EP 2 554 883 B1**
(45) Veröffentlichungstag und Bekanntmachung des Hinweises auf die Patenterteilung: **09.12.2015**
(21) Anmeldenummer: 12005264.2
(22) Anmeldetag: 18.07.2012
(51) Int. Cl.: F16K 31/06, F16K 31/08, B43K 8/22, F16K 13/10

(54) **Schreibgerät oder Kosmetikstift mit einem Regelventil**
Writing device or cosmetic pencil with a control valve
Dispositif d'écriture ou crayon cosmétique avec une vanne de régulation

(30) Priorität: 03.08.2011 DE 102011109291
(43) Veröffentlichungstag der Anmeldung: 06.02.2013
(73) Patentinhaber: Schneider GmbH & Co. Produktions- und Vetriebs-KG, 38855 Wernigerode/Harz (DE)
(72) Erfinder: Beer, Michael, 38855 Wernigerode (DE)
(74) Vertreter: Börjes-Pestalozza, Henrich

(56) Entgegenhaltungen:
- GB-A- 2 140 128
- US-B1- 6 450 203
- ANDO B ET AL: "Ferrofluidic Pumps: A Valuable Implementation Without Moving Parts", IEEE TRANSACTIONS ON INSTRUMENTATION AND MEASUREMENT, IEEE SERVICE CENTER, PISCATAWAY, NJ, US, Bd. 58, Nr. 9, 1. September 2009 (2009-09-01), Seiten 3232-3237, XP011271644, ISSN: 0018-9456, DOI: 10.1109/TIM.2009.2017167

## Beschreibung

Die vorliegende Erfindung betrifft ein Schreibgerät oder einen Kosmetikstift mit einem Regelventil.

Aus der DE-OS 191 13 947 kennt man bereits ein Schreibgerät, das an seinem unteren Ende eine Schreibspitze hat, die mit Hilfe einer Erregung in die Lage versetzbar ist, stufenlos veränderliche Strichlinien und Strichstrukturen zu bilden, wobei die kleinste Strichbreite im Falle des Erregungsstadiums Null zustande kommen und die Breite mit dem Grad des Erregungszustandes bis zu einem Maximum anwachsen soll. Die Schreibspitze des vorbekannten Schreibgerätes ist dazu als Stricherzeuger ausgebildet, der mit Hilfe eines vorzugsweise im Schreibgerät eingebauten elektromagnetischen oder druckluftgesteuerten Schwing- oder Rotationssystems erregbar ist. Das vorbekannte Schreibgerät erfordert nicht nur einen Stromanschluss oder gar eine Druckluftquelle für das Schwing- oder Rotationssystem, sondern ist mit einem erheblichen konstruktiven und apparativen Aufwand verbunden.

Aus der DE-OS 27 58 072 ist bereits ein Magnetventil mit einem Elektromagneten vorbekannt, der zur Betätigung von Schließgliedern vorgesehen ist, die als in einer Ventilkammer freibewegliche magnetisierbare Kleinstteilchen ausgebildet sind, die mit Hilfe der magnetischen Kraft des Elektromagneten bei Bedarf den Auslaß des Magnetventils verstopfen kann. Damit die als Kleinstteilchen ausgebildeten Schließglieder im Bereich des Auslasses gehalten werden können, ist eine Ventilkammer erforderlich. Darüber hinaus sieht das vorbekannte Magnetventil nur eine Schließ- und eine Offenposition vor, während ein Dosieren mit Hilfe des vorbekannten Magnetventils nicht gesteuert werden kann.

Aus der US 6 450 203 B1 ist bereits ein Verfahren zur Kontrolle des Flusses eines in einem Kanal strömenden Fluids bekannt. Das vorbekannte Verfahren sieht vor, den Kanal mittels einer Regelflüssigkeit partiell zu verschließen beziehungsweise zu öffnen, die von einer außerhalb des Kanals befindlichen Kraft beeinflussbar ist. Dabei ist in der US 6 450 203 B1 ein Ausführungsbeispiel erwähnt, bei dem die Regelflüssigkeit ein Ferrofluid und die außerhalb des Kanals befindliche Kraft zumindest ein Dauermagnet sein kann. Das bekannte Verfahren sieht nur ein Blockieren oder Öffnen des Kanals vor, jedoch keine Einstellung des Differenzdrucks.

Aus der EP 1 664 585 B1 kennt man bereits einen Stoßdämpfer mit einer ersten und einer zweiten Kammer, die über einen Strömungskanal miteinander verbunden sind, in den eine steuerbare Drosselung zwischengeschaltet ist. Diese steuerbare Drosselung umfasst ein erstes und ein zweites Filter, zwischen welchen Filtern eine Vielzahl von magnetisierbaren Partikeln angeordnet sind. Diese Vielzahl von Partikeln sind derart selektiv zwischen einer ersten Anordnung und einer zweiten Anordnung bewegbar, welche zweite Anordnung eine gegenüber der ersten Anordnung größere Durchflussmenge hat. Mit Hilfe des im vorbekannten Stoßdämpfer verwendeten Drosselventils ist lediglich eine zweistufige Drosselung des zwischen den Kammern durchströmenden Fluids -, nicht aber dessen insbesondere stufenlose Dosierung möglich.

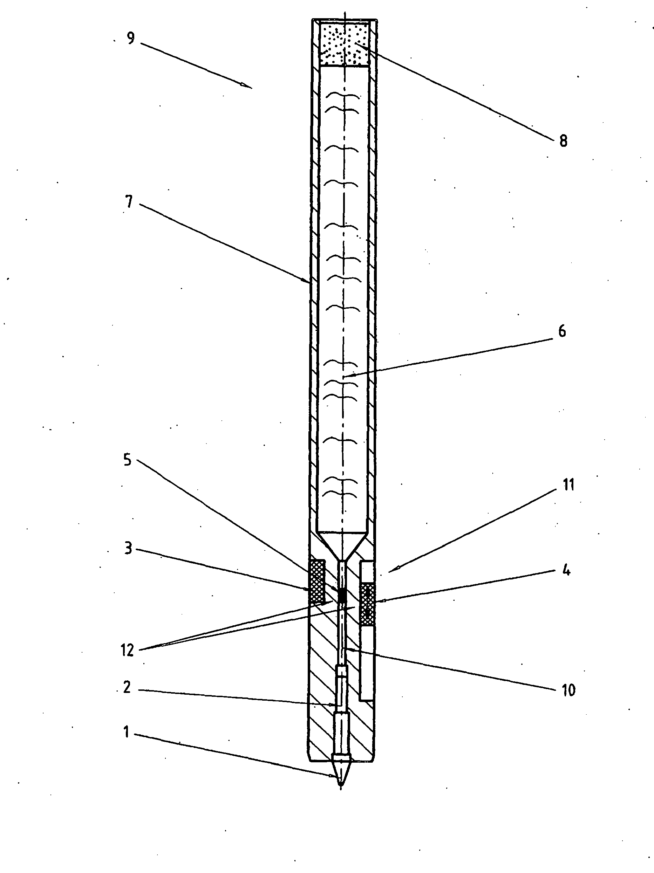

Aus ANDO, B. et.al: "Ferrofluidic Pumps: A Valuable Implementation Without Moving Parts", IEEE Transactions On Instrumentation And Measurement, IEEE Service Center, Piscatabay, NJ, US, BD. 58, Nr. 9, 1. September 2009 (2009-09-01), Seiten 3232 bis 3237, XP 011271644, ISSN: 0018-9456, DOI: 10.1109/TIM2009.2017167 ist bereits eine Förderpumpe vorbeschrieben, die in eine Flüssigkeitsleitung zwischengeschaltet ist. Die vorbekannte Förderpumpe weist einen Pumpenkörper ("Plunger") auf, dem zuströmseitig und abströmseitig jeweils ein Ventil vor- beziehungsweise nachgeschaltet sind. Dabei sind der Pumpenkörper und die als Einlass- und als Auslassventil der Förderpumpe dienenden Ventile jeweils durch ein in die Flüssigkeitsleitung injiziertes Ferrofluid gebildet, auf das mittels Elektromagneten eingewirkt wird. Die Ventile der vorbekannten Förderpumpe sind zwischen einer Offen- und einer Schließstellung verstellbar [vgl. Figur 2 (a)], in welcher Schließstellung das Ferrofluid den Leitungsquerschnitt verschließt. Die Leistungsfähigkeit der vorbekannten Pumpe wird in der zitierten Druckschrift anhand des Druckabfalls (vgl. Figur 5) und anhand der Förderleistung (vgl. Figur 6) beurteilt.

Es besteht daher die Aufgabe, ein Schreibgerät oder einen Kosmetikstift mit einem Regelventil der eingangs erwähnten Art zu schaffen, das sich durch eine besonders einfache Konstruktion und Herstellung sowie durch seine vielseitige Einsetzbarkeit auszeichnet.
Die erfindungsgemäße Lösung besteht in den Merkmalen des geltenden Patentanspruchs 1.

Das erfindungsgemäße Schreibgerät oder der erfindungsgemäße Kosmetikstift hat ein Regelventil mit einem Regelkanal, der von einer Kanalwandung umgrenzt ist. Im Kanalinnenraum des Regelkanals ist ein verformbares Regelelement vorgesehen, das als stabile Suspension von magnetischen Nanopartikeln in einer Trägerflüssigkeit hergestellt ist. Eine solche Suspension von magnetischen Nanopartikeln in einer Trägerflüssigkeit ist als sogenanntes "Ferrofluid" bekannt. Dieses aus einem Ferrofluid gebildete und entsprechend leicht verformbare Regel-: element wird zwischen zwei Magneten oder Elektromagneten derart im Kanalinnenraum gehalten, dass die Durchlässigkeit des Regelelements für das zu steuernde Medium und damit der maximal mögliche Differenzdruck im Regelkanal durch eine Relativbewegung der Magnete und durch die dadurch bewirkte Veränderung des zwischen den Magneten erzeugten Magnetfeldes variierbar ist. Die zur Veränderung des zwischen den Polen erzeugten Magnetfeldes erforderliche Relativbewegung der Magnetpole lässt sich bereits erzielen, wenn zumindest ein Magnet beweglich ausgestaltet ist. In einem Ausführungsbeispiel gemäß der Erfindung ist vorgesehen, die Magnete parallel zur Flussrichtung zu verschieben, um das zwischen den Magnetpolen erzeugte Magnetfeld zu verändern. Hat das Ferrofluid einen umlaufenden Kontakt zur Kanalwandung und stehen sich die Magneten gegenüber, so ist das Magnetfeld zwischen den Magneten maximal, ebenso die Kraft auf das Ferrofluid und damit auch die erzielte Druckdifferenz. Mit zunehmendem Abstand der Magnete voneinander wird das Magnetfeld zwischen ihnen schwächer, der erzielte Differenzdruck nimmt ab. Ab einer bestimmten noch größeren Verschiebung der Magnete reißt der Ferrofluidtropfen auf, es findet kein Differenzdruckaufbau mehr statt. Der oben beschriebene Bereich legt den Steuerbereich des Regelventils fest. Bei noch größerer Verschiebung der Magnete bilden sich zwei getrennte Ferrofluidtropfen, wobei die lichte Höhe der Tropfen kleiner als der lichte Durchmesser des Regelkanals sein kann.

Eine andere Ausführungsform gemäß der Erfindung sieht vor, dass die Magnetpole quer und insbesondere senkrecht zur Flussrichtung verschoben werden. Während auch hier bei umlaufendem Wandkontakt das Magnetfeld in der Mittelebene des Regelkanals senkrecht zum Magnetfeld maximal und der Differenzdruck entsprechend hoch ist, wird bei zunehmender Entfernung eines Magneten das Magnetfeld in der Mittelebene des Regelkanals senkrecht zum Magnetfeld und in der Mittelebene zwischen den Magneten schwächer und der Differenzdruck sinkt, wobei die Ferrofluidverteilung asymmetrisch wird. Wird der Magnet anschließend noch weiter auf Abstand gebracht, trennt sich auch der Ferrofluidtropfen von der inneren Kanalwandung des Regelkanals unterhalb des vom Regelkanal entfernteren Magneten und der Differenzdruck nähert sich dem Nullwert. Ist der entferntere Magnet derart vom Regelkanal auf Abstand gebracht, dass dieser Magnet keinen Einfluß mehr auf das Ferrofluid ausüben kann, lagert sich das Ferrofluid im Regelkanal nur im Bereich des dem Regelkanal angenäherten Magneten an, wobei die Höhe des Tropfens kleiner als der lichte Durchmesser des Regelkanals ist. Der Steuerbereich erstreckt sich hier vom kleinsten Magnetabstand bis zu dem Punkt, an dem sich der Ferrofluidtropfen von der Wandung löst.

Im Steuerbereich wandert das zu steuernde Medium bei Überschreitung des eingestellten Differenzdruckes in Form einzelner "Tropfen" durch das Ferrofluid. Der maximale Differenzdruck ist u.a. vom lichten Durchmesser des Regelkanals, der Magnetisierbarkeit des Ferrofluids, der Ferrofluid-Menge, der Stärke der verwendeten Magnete und vom Abstand der Magnete voneinander und vom Ferrofluid abhängig.

Alternativ lässt sich der Differenzdruck auch einstellen, indem man den Ferrofluidtropfen innerhalb eines Kanals mit variablem Innendurchmesser verschiebt.

Je nach Ausrichtung der Magnete lässt sich die Druckdifferenz und die Durchflussleistung im Bereich des Regelventils variabel steuern. Das erfindungsgemäß vorgesehene Regelventil ist somit konstruktiv einfach aufgebaut und mit geringem Aufwand sowie platzsparend herzustellen; das erfindungsgemäß vorgesehene Regelventil lässt sich daher vielseitig einsetzen. Um eine Beeinträchtigung des durch das Regelventil zu dosierenden Fluids zu vermeiden, sieht eine bevorzugte Ausführungsform gemäß der Erfindung vor, dass das Regelelement als eine mit dem einzuregelnden Fluid nicht mischbare Suspension ausgestaltet ist.

Möglich ist es, dass die zum Erzeugen des Magnetfeldes bestimmten Pole durch wenigstens einen Elektromagneten gebildet sind. Die Konstruktion des erfindungsgemäß vorgesehenen Regelventils wird jedoch wesentlich vereinfacht und dessen vielseitige Einsetzbarkeit wird noch zusätzlich erhöht, wenn die zum Erzeugen des Magnetfeldes bestimmten Pole durch wenigstens einen Dauermagneten gebildet sind.

Eine bevorzugte Weiterbildung gemäß der Erfindung sieht vor, dass wenigstens zwei Magnete und insbesondere wenigstens zwei Dauermagnete am Außenumfang des Regelkanals in Kanal-Längsrichtung relativ zueinander verschieblich geführt sind.

Nachstehend wird die Erfindung anhand der Figur noch näher erläutert, wobei nur beispielhaft eine mögliche Anwendung der Erfindung in einem Schreibgerät gezeigt ist.

In der einzigen Figur ist ein Stift 9 dargestellt, der als Schreibgerät oder als Kosmetikstift ausgebildet sein kann. Bei dem hier dargestellten Stift 9 soll die Abgabe eines Fluids, das Tinte oder eine kosmetische Rezeptur sein kann, nach den Wünschen und Bedürfnissen des Anwenders am Stift 9 selbst manuell beziehungsweise variabel gestaltet und der jeweiligen Situation angepasst werden können.

Der Stift 9 weist einen Schaft 7 auf, der eine Fluidkammer 6 mit einem Fluidvorrat hat. Die den Fluidvorrat beinhaltende Fluidkammer 6 ist über einen Zuführkanal 10 mit einer Schreib- oder Abgabespitze 1 an dem einen Stirnende des Stiftes 9 verbunden. Die Schreib- oder Abgabespitze 1 weist hier an der freien Spitze eines konisch vorstehenden Abschnitts eine Kugel auf, die das durch den Zuführkanal 10 nachfließende Fluid auf eine Unterlage und insbesondere auf eine Schreibunterlage zu übertragen hat. Die vorliegende Erfindung ist jedoch nicht auf Schreibgeräte mit Kugelspitzen eingeschränkt, vielmehr besteht auch die Möglichkeit, die Erfindung bei sogenannten Liner-, Faser- oder Pinsel-Spitzen und Federhalterfedern einzusetzen. Dabei kann der Schreibspitze 1 ein Docht 2 in Zuführrichtung unmittelbar vorgeschaltet sein. Um den Durchfluss des Fluids von der Fluidkammer 6 zur Schreib- oder Abgabespitze 1 zu steuern, ist ein Regelventil 11 vorgesehen. Das Regelventil 11 ist zwischen die Fluidkammer 6 und die Schreib- oder Abgabespitze 1 sowie deren Docht 2 in den Zuführkanal 10 zwischengeschaltet. Dabei bildet ein Teilbereich des Zuführkanals 10 einen Regelkanal des Regelventils 11. Dieser Regelkanal wird von einer Kanalwandung 12 umgrenzt, die den Kanalinnenraum umschließt. Im Kanalinnenraum ist ein verformbares Regelelement 5 vorgesehen. Das Regelelement 5 ist als stabile, kolloidale Suspension von magnetischen Nanopartikeln in einer Trägerflüssigkeit ausgebildet. Eine solche Suspension wird auch als "Ferrofluid" bezeichnet. Diese als Nanopartikel ausgebildeten Magnete können sich frei in der Trägerflüssigkeit bewegen und setzen sich weder im Schwerefeld noch im Magnetfeld ab. Ohne ein äußeres Magnetfeld sind die magnetischen Momente der einzelnen Partikel zufällig ausgerichtet. Nach außen hin zeigt das als Regelelement 5 dienende Ferrofluid in diesem Stadium keine Magnetisierung. In Anwesenheit eines äußeren Magnetfeldes richten sich die einzelnen, im Ferrofluid enthaltenen Nanopartikel jedoch in Richtung der magnetischen Kraftlinien aus. Dabei reagiert das gesamte Ferrofluid wie eine homogene Flüssigkeit unmittelbar auf das Feld, - es wird angezogen wie ein flüssiger Magnet. Je nach Ausrichtung und/oder Stärke des Magnetfeldes lässt sich der Durchfluss des Fluids variabel steuern.

Das Magnetfeld wird hier durch zwei Dauermagnete 3, 4 gebildet. Während der Dauermagnet 3 ortsfest im Schaft 7 gehalten ist, ist der Dauermagnet 4 außerhalb der Kanalwandung des Regelkanals verschieblich am Schaft 7 geführt. In anderen, hier nicht gezeigten Anwendungsbeispielen kann es vorteilhaft sein, wenn die zumindest zwei Magnete beweglich ausgestaltet sind. Damit lässt sich die Durchlässigkeit des Regelelements 5 durch eine Veränderung des zwischen den Polen der Dauermagnete 3, 4 erzeugten Magnetfeldes variieren, wobei das Magnetfeld durch eine Relativbewegung der Dauermagnete 3, 4 und ihrer Pole verändert wird.

Das Regelelement 5 ist hier als eine mit dem einzuregelnden Fluid unvermischbare Suspension ausgestaltet. Ist das einzudosierende Fluid beispielsweise auf Wasserbasis hergestellt, sollte das als Regelelement 5 verwendete Ferrofluid wasserstabil, d.h. nicht wasserlöslich und auch nicht wasseraufnehmend sein, wie dies zum Beispiel bei perfluorierten Lösemitteln, Kohlenwasserstoffen und Silikonöle wie z.B. im Vakuumpumpenölen verwendet der Fall ist. Als Trägerflüssigkeit für das Ferrofluid können beispielsweise perfluorierte Lösemittel, Kohlenwasserstoffe, Silikönöle verwendet werden. Die Viskosität des Ferrofluids sollte 2 bis 1.000 mPas, vorzugsweise 6 bis 400 mPas betragen. Die Magnetisierbarkeit des Ferrofluids sollte 10 bis 120 mT, vorzugsweise 20 bis 80 mT betragen. Als Volumen wird eine Ferrofluid-Menge bevorzugt, bei der die Länge des Ferrofluid-Tropfens dem zwei- bis vierfachen lichten Durchmesser des Regelkanals entspricht. Dabei wird eine Stabilität des Ferrofluids im Kontakt zur einzuregelnden Fluid für mindestens ein oder zwei Jahre angestrebt. Der lichte Durchmesser des Regelkanals sollte 0,5 bis 2 mm, vorzugsweise 1 bis 1,5 mm betragen. Als Dauermagnete können alle Arten von Magneten verwendet werden, jedoch werden Neodym-Bor-Eisen-Magnete bevorzugt. Das Ferrofluid sollte bei einem wasserhaltigen Fluid nicht mit Wasser mischbar und in Kontakt mit Wasser stabil sein. Das verwendete Ferrofluid sollte über einen Zeitraum von zumindest zwei Jahren in Kontakt zur geregelten Flüssigkeit stabil sein. Dabei wird eine Anwendbarkeit des Regelventils in Temperaturbereichen von beispielsweise -10° bis +60° angestrebt. Das als Regelelement 5 verwendete Ferrofluid sollte kompatibel zu den zur Herstellung von Stiften üblichen Kunststoffen, wie beispielsweise ABS und PP sein und sich keinesfalls durch eine hohe Flüchtigkeit, Diffusion oder Quellverhalten auszeichnen.

Sofern der Stift 1 als Schreibgerät verwendet werden soll, sollte als Fluid vorzugsweise eine Tinte verwendet werden, deren Viskosität beispielsweise 1 bis 20 mPas und deren Oberflächenspannung 20 bis 80 mN/m², vorzugsweise 30 bis 50 mN/m² betragen kann. Die Fluidkammer 6 kann mit dem Fluidvorrat von beiden Stirnenden des Schaftes 7 aus beschickt werden, wobei das der Schreib- oder Abgabespitze 1 abgewandte Stirnende hier durch eine Abschlussmasse 8 verschlossen ist, wie sie so oder ähnlich auch in anderen Schreibgeräten wie beispielsweise Kugelschreiber- oder Gel-Minen verwendet wird, verschlossen. Der Zufuhrkanal 10 kann im Schaft integriert sein oder - hier nicht dargestellt - als Bestandteil des Tintenleiterröhrchens oder Minenrohres ausgeführt werden.

Ein bevorzugtes Ausführungsbeispiel sieht die Verwendung des Regelventils 11 in einem Schreibgerät vor. Mit Hilfe des Regelventils 11 lässt sich die Tintenabgabe derart einregeln, dass auf Wunsch des Anwenders die Farbintensität und Strichbreite des Schriftbildes verändert werden kann. Dabei lässt sich das Regelventil 11 sowohl in Einweg-Stiften als auch in Minen-Schreibgeräten oder in Minen-Nachfüllsystemen verwenden. Das Regelventil 11 erlaubt eine kurzfristige Veränderung der Tintenabgabe und ist unempfindlich gegen Änderungen des Umgebungsdrucks und der Umgebungstemperatur.

### Bezugszeichenliste

| | |
|---|---|
| Schreib- oder Abgabespitze | 1 |
| Docht | 2 |
| Dauermagnet (feststehend) | 3 |
| Dauermagnet (verschieblich geführt) | 4 |
| Regelelement | 5 |
| Fluidkammer | 6 |
| Schaft | 7 |
| Stopfen | 8 |
| Stift | 9 |
| Zufuhrkanal | 10 |
| Regelventil | 11 |
| Kanalwandung | 12 |

## Patentansprüche

1. Schreibgerät oder Kosmetikstift mit einem Regelventil (11) mit zumindest einem, von einer Kanalwandung (12) umgrenzten Regelkanal, **dadurch gekennzeichnet, dass** im des Regelkanals ein verformbares Regelelement (5) vorgesehen ist, das als stabile Suspension von magnetischen Nanopartikeln in einer Trägerflüssigkeit also sogenanntes "Ferrofluid" hergestellt und zwischen wenigstens zwei Magneten oder Elektromagneten (3, 4) derart im Kanalinnenraum gehalten ist, dass die Durchlässigkeit des Regelelements (5) und damit der maximal mögliche Differenzdruck im Regelkanal durch die mittels einer Relativbewegung der Magnete (3, 4) bewirkte Veränderung des zwischen den Magneten (3, 4) erzeugten Magnetfeldes oder durch Veränderung der Feldstärke bei Elektromagneten variierbar ist.

2. Schreibgerät oder Kosmetikstift nach Anspruch 1, **dadurch gekennzeichnet, dass** das Regelelement (5) als eine mit dem einzuregelnden Fluid unvermischbare Suspension ausgestaltet ist.

3. Schreibgerät oder Kosmetikstift nach Anspruch 1 oder 2, **dadurch gekennzeichnet, dass** die zum Erzeugen des Magnetfeldes bestimmten Magnete (3, 4) als Elektromagnete ausgebildet sind.

4. Schreibgerät oder Kosmetikstift nach einem der Ansprüche 1 bis 3, **dadurch gekennzeichnet, dass** die zum Erzeugen des Magnetfeldes bestimmten Magnete als Dauermagnete ausgebildet sind.

5. Schreibgerät oder Kosmetikstift nach Anspruch 4, **dadurch gekennzeichnet, dass** die Dauermagnete aus Neodym-Bor-Eisen hergestellt sind.

6. Schreibgerät oder Kosmetikstift nach einem der Ansprüche 1 bis 5, **dadurch gekennzeichnet, dass** wenigstens zwei Magnete und insbesondere wenigstens zwei Dauermagnete (3, 4) am Außenumfang des Regelkanals in Kanal-Längsrichtung oder quer zur Kanal-Längsrichtung relativ zueinander verschieblich geführt sind.

7. Schreibgerät oder Kosmetikstift nach einem der Ansprüche 1 bis 6, **dadurch gekennzeichnet, dass** das Ferrofluid eine Viskosität von 2 bis 1.000 mPas, vorzugsweise von 6 bis 400 mPas hat und/oder dass das Ferrofluid eine Magnetisierbarkeit von 10 bis 120 mT, vorzugsweise von 20 bis 80 mT, aufweist.

8. Schreibgerät oder Kosmetikstift nach einem der Ansprüche 1 bis 7, **dadurch gekennzeichnet, dass** das Regelventil (11) eine Ferrofluid-Menge aufweist, derart, dass die Länge des im Regelventil vorgesehenen Ferrofluid-Tropfens dem zweibis vierfachen des lichten Kanaldurchmessers des Regelkanals entspricht.

## Claims

1. Writing device or cosmetic pencil having a control valve (11) having at least one control channel delimited by a channel wall (12), **characterised in that** a deformable control element (5) is provided in the channel interior of the control channel, said control element being produced as a stable suspension of magnetic nanoparticles in a carrier fluid as a so-called "ferrofluid" and being held in the channel interior between at least two magnets or electromagnets (3, 4) such that the permeability of the control element (5) and thus the maximum possible differential pressure in the control channel can be varied by the variation of the magnetic field generated between the magnets (3, 4), said variation being caused by a relative movement of the magnets (3, 4), or can be varied by the variation of the field strength in electromagnets.

2. Writing device or cosmetic pencil as claimed in claim 1, **characterised in that** the control element (5) is configured as a suspension which cannot be mixed with the fluid to be adjusted.

3. Writing device or cosmetic pencil as claimed in claim 1 or 2, **characterised in that** the magnets (3, 4) intended to generate the magnetic field are formed as electromagnets.

4. Writing device or cosmetic pencil as claimed in any one of claims 1 to 3, **characterised in that** the magnets intended to generate the magnetic field are formed as permanent magnets.

5. Writing device or cosmetic pencil as claimed in claim 4, **characterised in that** the permanent magnets are produced from neodymium-boron-iron.

6. Writing device or cosmetic pencil as claimed in any one of claims 1 to 5, **characterised in that** at least two magnets and in particular at least two permanent magnets (3, 4) are guided in a displaceable manner relative to each other on the outer circumference of the control channel in the channel longitudinal direction or transversely with respect to the channel longitudinal direction.

7. Writing device or cosmetic pencil as claimed in any one of claims 1 to 6, **characterised in that** the ferrofluid has a viscosity of 2 to 1000 mPas, preferably of 6 to 400 mPas, and/or **in that** the ferrofluid has a magnetisability of 10 to 120 mT, preferably of 20 to 80 mT.

8. Writing device or cosmetic pencil as claimed in any one of claims 1 to 7, **characterised in that** the control valve (11) has an amount of ferrofluid such that the length of the ferrofluid drop provided in the control valve corresponds to two-times to four-times the clear channel diameter of the control channel.

## Revendications

1. Dispositif d'écriture ou crayon cosmétique avec une vanne de régulation (11) avec au moins un canal de régulation entouré par une paroi de canal (12), **caractérisé en ce qu'**il est prévu dans l'espace intérieur du canal de régulation un élément de régulation déformable (5) qui est fabriqué sous la forme d'une suspension stable de nanoparticules magnétiques dans un liquide porteur sous le nom de « Ferrofluide » et qui est maintenu entre au moins deux aimants ou électroaimants (3, 4) dans l'espace intérieur de canal, de telle manière que la perméabilité de l'élément de régulation (5) et, dès lors, la différence de pression maximale possible dans le canal de régulation puisse être modifiée par la variation du champ magnétique produit entre les aimants (3, 4) provoquée au moyen d'un mouvement relatif des aimants (3, 4) ou par la variation de l'intensité du champ pour des électroaimants.

2. Dispositif d'écriture ou crayon cosmétique selon la revendication 1, **caractérisé en ce que** l'élément de régulation (5) est constitué par une suspension non miscible avec le fluide à réguler.

3. Dispositif d'écriture ou crayon cosmétique selon la revendication 1 ou 2, **caractérisé en ce que** les aimants (3, 4) destinés à la production du champ magnétique sont constitués par des électroaimants.

4. Dispositif d'écriture ou crayon cosmétique selon l'une quelconque des revendications 1 à 3, **caractérisé en ce que** les aimants destinés à produire le champ magnétique sont constitués par des aimants permanents.

5. Dispositif d'écriture ou crayon cosmétique selon la revendication 4, **caractérisé en ce que** les aimants permanents sont fabriqués en néodyme-bore-fer.

6. Dispositif d'écriture ou crayon cosmétique selon l'une quelconque des revendications 1 à 5, **caractérisé en ce qu'**au moins deux aimants et, en particulier, au moins deux aimants permanents (3, 4) sont guidés de façon coulissante l'un par rapport à l'autre à la périphérie extérieure du canal de régulation dans la direction longitudinale du canal ou transversalement à la direction longitudinale du canal.

7. Dispositif d'écriture ou crayon cosmétique selon l'une quelconque des revendications 1 à 6, **caractérisé en ce que** le ferrofluide présente une viscosité de 2 à 1 000 mPas, de préférence de 6 à 400 mPas et/ou **en ce que** le ferrofluide présente une capacité d'aimantation de 10 à 120 mT, de préférence de 20 à 80 mT.

8. Dispositif d'écriture ou crayon cosmétique selon l'une quelconque des revendications 1 à 7, **caractérisé en ce que** la vanne de régulation (11) présente une quantité de ferrofluide, telle que la longueur de la goutte de ferrofluide prévue dans la vanne de régulation corresponde à deux fois à quatre fois le diamètre de canal libre du canal de régulation.
